# EUROPÄISCHE PATENTSCHRIFT

(11) **EP 0 933 001 B1**
(45) Veröffentlichungstag und Bekanntmachung des Hinweises auf die Patenterteilung: **20.07.2005**
(21) Anmeldenummer: 98946253.6
(22) Anmeldetag: 04.08.1998
(51) Int. Cl.: H04Q 7/38

(54) **VERFAHREN UND ANORDNUNG FÜR EINE ZUGANGSSTEUERUNG ZU MOBILFUNKNETZEN**
METHOD AND DEVICE FOR CONTROLLING ACCESS TO MOBILE RADIO TELEPHONE NETWORKS
PROCEDE ET DISPOSITIF POUR UN CONTROLE D'ACCES A DES RESEAUX DE SERVICES RADIOTELEPHONIQUES MOBILES

(30) Priorität: 08.08.1997 DE 19734288
(43) Veröffentlichungstag der Anmeldung: 04.08.1999
(73) Patentinhaber: T-Mobile Deutschland GmbH, 53227 Bonn (DE)
(72) Erfinder: GROTE, Ulrich, D-61231 Bad Nauheim (DE)
(74) Vertreter: Riebling, Peter, Dr.-Ing.
(86) Internationale Anmeldenummer: PCT/DE1998/002235
(87) Internationale Veröffentlichungsnummer: WO 1999/008467

(56) Entgegenhaltungen:
- WO-A-97/22221
- DE-U- 29 713 989
- GB-A- 2 265 522
- US-A- 5 109 401
- US-A- 5 604 787

## Beschreibung

Der Zugang zu Mobilfunknetzen wird in der Regel durch das Ergebnis bestimmter Abfrageprozeduren zwischen dem Netz und dem Endgerät ermöglicht. Je nach Ergebnis kann der Endgerätenutzer mit seinem Gerät in dem betreffenden Netz alle angebotenen Dienste oder nur eingeschränkte Dienste nutzen oder z.B. nur spezielle Sonderdienste wie Notruffunktionen beanspruchen.

EP 0 641 137 beschreibt ein Verfahren und eine Anordnung zum Beschränken des Zugriffs zu einem Mobilfunknetz. EP 0 757 502 offenbart ein Verfahren zur Sperrung von Teilnehmeridentifikationsmodulen per Funk.

WO 97 22221 A offenbart ein Verfahren für eine Zugangssteuerung von mobilen Telefonen zu Mobilfunknetzen, wobei Berechtigungen für Endgerätebenutzer erst bei einem vorgegebenen Status eines endgeräteseitig oder netzseitig vorgesehenen numerischen Wertes freigeschaltet werden. Als numerischer Wert wird ein Schlüssel verwendet, der zur Erzeugung eines Codewortes sowohl beim Netzbetreiber als auch im Telefon dient. Die beiden Codeworte werden verglichen, und bei Übereinstimmung wird das Telefon freigeschaltet.

Bei den aus dem Stand der Technik bekannten Verfahren und Anordnungen ist jeweils ein statisches Szenario vorgegeben, d.h. die bestehenden Berechtigungen sind fest vorgegeben. Änderungen der Berechtigungen erfordern jeweils ein aktives Eingreifen von Seiten des Netzbetreibers, was oft mit nicht unerheblichem Aufwand verbunden ist.

US 5 109 401 A betrifft ein mobiles Kommunikationssystem mit einer Kontrolle der Gesprächsgebühren, bei dem vor einem Gespräche eine maximal erlaubte Gesprächsgebühr vorgegeben werden kann. Während des Gesprächs werden die Gesprächseinheiten gezählt und daraus die aktuellen Gesprächsgebühr berechnet und geprüft, ob die aktuelle Gesprächsgebühr die vorgegebene Gesprächsgebühr übersteigt, wobei dann die Gesprächesteilnehmer darüber informiert werden.

Aufgabe der vorliegenden Erfindung ist es, den Zugang zu mindestens einem Mobilfunknetz und bestimmte Berechtigungen ohne aufwendigen Eingriff des Netzbetreibers zu steuern.

Diese Aufgabe wird gelöst durch die Merkmale der Ansprüche 1 und 6.

Ein Gegenstand der vorliegenden Erfindung ist ein Verfahren, nach dem eine bestimmte Berechtigung für Endgeräte, die zur Benutzung in einem Mobilfunknetz vorgesehen sind, erst bei einem vorgegebenen Status eines Zählers freigeschaltet werden. Als zu zählende Parameter kommen insbesondere angefallene Einheiten, angefallene Gesprächszeiten, Zahl der Zellwechsel, Zahl der Wechsel in andere Netze (besonders in Netze von Roaming-Partnern) etc. in Frage. Es kann jedoch auch einfach eingewisser Zeitablauf vorgegeben sein, z.B. Freigabe erst nach 2 Jahren. Somit erfolgt eine Freigabe der Berechtigungen automatisch, ohne daß ein Eingreifen von Seiten des Betreibers notwendig wird.

Solche Zähler sind sowohl netzseitig als auch endgeräteseitig ausgebildet. Es ist also je ein netzseitiger und ein endgeräteseitiger Zähler vorgesehen. Einer der beiden Zähler kann dann z.B. als Kontrollinstanz verwendet werden, um im Bedarfsfall Kontrollen und Abgleiche zu ermöglichen. Als Berechtigungen können die Zugänge zu bestimmten Diensten und Leistungen im Netz freigegeben werden wie z.B. Mobilbox, Fax- und Datendienste oder auch verbesserte Übertragungsqualität oder günstigere Verbindungstarife etc. oder endgeräteseitige Zusatzfunktionen freigeschaltet werden wie z.B. spezielle Adreßregister, Spielefunktionen etc.

Durch diese Funktionalitäten werden treue Kunden mit Zusatzleistungen und Diensten belohnt und es kann eine längerfristigere Kundenbindung erfolgen.

Es können auch gesamte Zugänge zu bestimmten Funknetzen freigegeben werden. Damit kann verhindert werden, daß ein Nutzer ein Endgerät eines Netzbetreibers in einem günstigen Angebot erwirbt und nach kurzer Zeit zu einem anderen Betreiber wechselt. Es kann dann vorgesehen werden, daß der Zugang zu fremden Netzen erst nach einer gewissen Nutzungszeit des Endgerätes im Netz des betreffenden Netzbetreibers freigegeben wird.

Somit kann verhindert werden, daß ein teure Subventionen auf Endgeräte durch den Netzbetreiber zum Erwerb eines günstigen Endgerätes ausnutzt und dann zu einen günstigen Anbieter wechselt, ohne daß der subventionierende Netzbetreiber seine Investitionen wettmachen konnte.

Wie bereits beschreiben kann eine Sperrung und spätere Freigabe von Berechtigungen sowohl netzseitig als auch endgeräteseitig erfolgen. Handelt es sich um Mobilfunknetze, in denen Teilnehmeridentifikationsmodule UIM z.B. in Form von Chipkarten Verwendung finden, so bedeutet endgeräteseitig, daß die entsprechenden Funktionen im Endgerät selbst oder in der Chipkarte realisiert sein können oder auf beide aufgeteilt sind. D.h. insbesondere, daß die Sperrung bzw. Berechtigungsfreigabe entweder durch das Endgerät selbst, oder durch das UIM oder durch ein Zusammenwirken von beiden erfolgen kann. Insbesondere kann auch vorgesehen sein, daß das Endgerät bestimmte UIM nicht akzeptiert, z.B. alle UIM eines fremden Netzbetreibers. Es können auch bestimmte Endgeräte oder bestimmte UIM durch netzseitige Vorkehrungen gesperrt sein und erst nach obigem Vorgehen freigegeben werden.

Gerade bei einer endgeräteseitigen Ausführung der Erfindung kann vorgesehen werden, daß die Vorgaben und Einstellungen des Zählers vom Netzbetreiber per Funk überwacht und/oder bei Bedarf angepaßt werden können, z.B. bei Fehlfunktionen oder Anderung der Gesprächstarife. Eine entsrpechende Anpassung ist natürlich auch bei einer netzseitigen Realisierung vorzusehen.

Anhand des nachfolgenden Beispieles wird eine spezielle Ausbildungsform der Erfindung näher erläutert.

Ein GSM-Netzbetreiber schützt seine Endgerätesubventionen dadurch, daß seine Geräte z.B. über einen speziellen Code gesichert werden und nur noch die UIM dieses Netzbetreibers akzeptieren. Es kann diesen Schutz auch nur für Endgeräte zur Benutzung bestimmter Dienste vorsehen, z.B. im Rahmen von Verkäufen vorausbezahlter Karten (Prepaid-Karten). Anstatt nun die Geräte über einen entsprechenden Entsperrcode von Hand nach einer gewissen Zeit auch für die Benutzung von UIM anderer Netzbetreiber freizugeben, wird in den Endgeräten ein Zähler vorgesehen. Dieser zählt die Gesprächszeit, die mit dem Endgerät im Netz des Netzbetreibers telefoniert wurde. Erreicht der Zähler einen vorgegebenen Wert, so wird die Sperre für andere UIM automatisch durch eine entsprechende Instanz im Endgerät aufgehoben und der Teilnehmer kann auch andere UIM nutzen. Durch eine geeignete Einstellung des vorgegebenen Wertes kann der Netzbetreiber z.B. sicherstellen, daß ihm zumindest die Investitionen für die Gerätesubvention wieder zufließen.

## Patentansprüche

1. Verfahren für eine Zugangssteuerung zu wenigstens einem Mobilfunknetz, wobei Berechtigungen für Endgerätebenutzer erst bei einem vorgegebenen Status eines endgeräteseitig oder netzseitig vorgesehenen numerischen Wertes freigeschaltet werden,
**dadurch gekennzeichnet,**
**daß** als Wert sowohl netzseitig als auch endgeräteseitig ein Zähler verwendet wird, wobei einer der beiden Zähler als Kontrollinstanz für Kontrollen und Abgleiche des anderen Zählers verwendet wird.

2. Verfahren nach Anspruch 1,
**dadurch gekennzeichnet,**
**daß** Gesprächsparameter der Gespräche des Endgerätebenutzers gezählt werden.

3. Verfahren nach einem der Ansprüche 1 oder 2,
**dadurch gekennzeichnet,**
**daß** als Berechtigungen Dienste oder Leistungen des Mobilfunknetzes freigegeben werden.

4. Verfahren nach einem der Ansprüche 1 bis 3,
**dadurch gekennzeichnet,**
**daß** als Berechtigungen der Zugang zu weiteren Mobilfunknetzen freigegeben wird.

5. Verfahren nach Anspruch 4,
**dadurch gekennzeichnet,**
**daß** Teilnehmeridentifikationsmodule weiterer Mobilfunknetze für die Benutzung im Endgerät des Endgerätebenutzers freigegeben werden.

6. Anordnung für eine Zugangssteuerung zu wenigstens einem Mobilfunknetz, wobei endgeräteseitig oder netzseitig ein numerischer Wert vorgesehen ist sowie eine Freigabeinstanz, die Berechtigungen für den Endgerätebenutzer freischaltet, sobald der Wert einen vorgegebenen Status erreicht,
**dadurch gekennzeichnet,**
**daß** der Wert ein Zähler ist, der sowohl netzseitig als auch endgeräteseitig ausgebildet ist, wobei einer der beiden Zähler als Kontrollinstanz für Kontrollen und Abgleiche des anderen Zählers verwendet wird.

7. Anordnung nach Anspruch 6,
daß der Zähler als Zähler für Gesprächsparameter ausgebildet ist.

8. Anordnung nach einem der Ansprüche 6 oder 7,
**dadurch gekennzeichnet,**
**daß** die Freigabeinstanz Mittel zur Freigabe der Benutzung von Teilnehmeridentifikationsmodulen weiterer Mobilfunknetze im Endgerät aufweist.

9. Anordnung nach einem der Ansprüche 6 bis 8,
**dadurch gekennzeichnet,**
**daß** der Zähler als Gesprächszeitenzähler ausgebildet ist.

10. Anordnung nach einem der Ansprüche 6 bis 8,
**dadurch gekennzeichnet,**
**daß** der Zähler als Gesprächseinheitenzähler ausgebildet ist.

11. Anordnung nach einem der Ansprüche 6 bis 10,
**dadurch gekennzeichnet,**
**daß** sie Teil eines Mobilfunkendgerätes ist.

## Claims

1. Method for access control to at least one mobile radio telephone network, wherein authorisations for terminal users are released only on presence of a preset status of a numerical value provided on the terminal side or the network side, **characterised in that** a counter is used as value on both the network side and the terminal side, one of the two counters being used as a checking authority for checks and compensations of the other counter.

2. Method according to claim 1, **characterised in that** call parameters of the calls of the terminal user are counted.

3. Method according to one of claims 1 or 2, **characterised in that** services or capabilities of the mobile radio telephone network are released as authorisations.

4. Method according to one of claims 1 to 3, **characterised in that** access to further mobile radio telephone networks is released as authorisations.

5. Method according to claim 4, **characterised in that** subscriber identification modules of further mobile radio telephone networks are released for use in the terminal of the terminal user.

6. Arrangement for access control to at least one mobile radio telephone network, wherein a numerical value is provided on the terminal side or the network side and also a releasing authority, which releases authorisations for the terminal user as soon as the value reaches a preset status, **characterised in that** the value is a counter, which is constructed on both the network side and the terminal side, one of the two counters being used as checking authority for checks and compensations of the other counter.

7. Arrangement according to claim 6, [**characterised in**] that the counter is constructed as a counter for call parameters.

8. Arrangement according to one of claims 6 or 7, **characterised in that** the releasing authority has means for releasing the use of subscriber identification modules of further mobile radio telephone networks in the terminal.

9. Arrangement according to one of claims 6 to 8, **characterised in that** the counter is constructed as a call time counter.

10. Arrangement according to one of claims 6 to 8, **characterised in that** the counter is constructed as a call unit counter.

11. Arrangement according to one of claims 6 to 10, **characterised in that** it is part of a mobile radio telephone terminal.

## Revendications

1. Procédé pour un contrôle d'accès à au moins un réseau radiotéléphonique, selon lequel les autorisations pour des utilisateurs de terminaux ne sont données qu'en présence d'un état prédéfini d'une valeur numérique prévue côté terminal ou côté réseau,
**caractérisé en ce qu'**on utilise comme valeur un compteur, aussi bien côté réseau que côté terminal, l'un des deux compteurs étant utilisé comme instance de contrôle pour les contrôles et les alignements de l'autre compteur.

2. Procédé selon la revendication 1, **caractérisé en ce que** des paramètres d'appels de l'utilisateur du terminal sont comptés.

3. Procédé selon la revendication 1 ou 2, **caractérisé en ce que** l'on accorde comme autorisations des services ou des prestations du réseau mobile.

4. Procédé selon l'une des revendications 1 à 3, **caractérisé en ce que** l'on accorde comme autorisations l'accès à d'autres réseaux mobiles.

5. Procédé selon la revendication 4, **caractérisé en ce que** des modules d'identification d'abonnés d'autres réseaux mobiles sont autorisés à être utilisés dans le terminal de l'utilisateur du terminal.

6. Dispositif pour un contrôle d'accès à au moins un réseau radiotéléphonique, étant précisé qu'il est prévu côté terminal ou côté réseau une valeur numérique ainsi qu'une instance d'autorisation qui donne les autorisations pour l'utilisateur du terminal dès que la valeur atteint un état prédéfini,
**caractérisé en ce que** la valeur est un compteur qui est prévu aussi bien côté réseau que côté terminal, l'un des deux compteurs étant utilisé comme instance de contrôle pour les contrôles et les alignements de l'autre compteur.

7. Dispositif selon la revendication 6, **caractérisé en ce que** le compteur est conçu comme un compteur pour des paramètres d'appels.

8. Dispositif selon la revendication 6 ou 7, **caractérisé en ce que** l'instance d'autorisation comporte des moyens pour autoriser l'utilisation de modules d'identification d'abonné d'autres réseaux mobiles dans le terminal.

9. Dispositif selon l'une des revendications 6 à 8, **caractérisé en ce que** le compteur est conçu comme un compteur de temps d'appels.

10. Dispositif selon l'une des revendications 6 à 8, **caractérisé en ce que** le compteur est conçu comme un compteur d'unités d'appels.

11. Dispositif selon l'une des revendications 6 à 10, **caractérisé en ce qu'**il fait partie d'un terminal radiotéléphonique mobile.
